# EUROPEAN PATENT APPLICATION

(11) **EP 1 707 322 A1**
(43) Date of publication of application: **04.10.2006**
(21) Application number: 05028632.7
(22) Date of filing: 29.12.2005
(51) Int. Cl.: B25F 5/00, B23B 45/00, B25F 3/00

(54) **Combination drill**

(30) Priority: 24.03.2005 US 90947
(71) Applicant: Techtronic Industries Co., Ltd., Tsuen Wan, N.T. Hong Kong (CN)
(72) Inventor: Whitmore, Jason Porter, 29673 Piedmont, SC (US); Huggins, Mark S., 29631 Clemson, SC (US)
(74) Representative: HOFFMANN EITLE

(57) **Abstract**

A clutch bypass for a combination drill has a gearbox connected to a motor and an output spindle. The gearbox includes a ring gear. A clutch mechanism is coupled with the gearbox to selectively transmit torque from the motor to the output spindle. The clutch mechanism includes at least one link member disposed adjacent the ring gear and a rotatable mode selector disposed adjacent the link member. The mode selector has at least one opening that can receive a bypass member. The mode selector has a first position in which the bypass member does not abut the link member, and a second position in which the bypass member abuts the link member.

## Description

### BACKGROUND

The present invention relates to power tools, and in particular to combination drills capable of switching between different modes of operation.

A conventional combination drill may provide more than one mode of operation. For example, a first mode referred to as a drill mode provides continuous rotation of the output spindle without torque limitation during drilling operations. A second mode referred to as a drive mode controls output torque when setting screws. A third mode referred to as a hammer mode imparts a reciprocating motion to the spindle in order to facilitate drilling masonry and other hard materials.

Such combination drills typically include a spring loaded clutch for transmitting torque from a gearbox driven by a motor to the output spindle. A pair of ratchets that are connected to the spindle and the drill housing may also be provided for a hammer/driver/drill. The ratchets can cooperate with each other to generate a reciprocating motion during a drilling operation. When using a combination drill in the drill mode and the hammer mode of operation, the clutch is held in firm engagement to provide continuous rotation of the spindle without limiting the amount of torque transmitted from the gearbox to the spindle.

When using a combination drill for different applications in driver mode, however, it may be necessary to adjust the output torque in order to help prevent the possibility of damaging screw heads, threads, or the workpiece. The proper torque setting may depend on the type of material and the size of screw used. If the torque is too high, the workpiece may be damaged or the screws may be damaged or broken. Accordingly, for the drive mode of operation, the clutch is allowed to slip at a predetermined torque for the drive mode. The torque limitation for the drive mode is adjusted, for example, using a torque adjustment ring that varies the compression of the clutch spring. The torque is greater when the torque adjustment ring is set on a higher setting. The torque is less when the torque adjustment ring is set on a lower setting.

Since the drill mode and the hammer mode do not require setting a torque limitation, it is desirable to switch between different modes of operation of a combination drill without affecting the torque limitation setting for the drive mode. Accordingly, an advantage to the present invention is that a user can maintain the same torque limitation setting for a drill while switching between the drive, drill and hammer modes operation.

### BRIEF SUMMARY

In one aspect of the invention, a combination drill is provided. The combination drill comprises a gearbox that is connected to a motor and an output spindle. The gearbox includes a ring gear. The drill further comprises a clutch mechanism coupled with the gearbox to selectively transmit torque from the motor to the output spindle. The clutch mechanism includes at least one link member disposed adjacent the ring gear and a mode selector disposed adjacent the link member. The mode selector has at least one opening formed thereon for receiving a bypass member therein. The mode selector further has a first position in which the bypass member does not abut the link member, and a second position in which the bypass member abuts the link member.

In another aspect of the invention, the combination drill further comprises a washer mounted over the output spindle and a clutch mechanism coupled with the gearbox to selectively transmit torque from the motor to the output spindle. The link member is disposed between the washer and the ring gear and a blocking member is disposed adjacent the washer for selectively engaging the washer. The blocking member has a first position in which the blocking member engages the washer, and a second position in which the blocking member does not engage the washer.

In another aspect of the invention, the combination drill further comprises a clutch mechanism coupled with the gearbox to selectively transmit torque from the motor to the output spindle. The link member is disposed adjacent the ring gear and a capture member is disposed adjacent the link member for selectively engaging the link member. The link member has a slot formed on an end thereof. The blocking member has a first position in which the capture member is at least partially received in the slot, and a second position in which the capture member does not engage the link member.

### BRIEF DESCRIPTION OF THE DRAWINGS

FIG. 1 is a partial exploded view of a combination driver/drill in accordance with an embodiment of the present invention;

FIG.2 is another partial exploded view of the driver/drill of FIG. 1;

FIG. 3 is a side view, in partial cross section, of the driver/drill of FIG. 1;

FIG. 4 is a partial exploded view of the driver/drill of FIG. 1 with a hammer mechanism;

FIG. 5 is another partial exploded view illustrating the hammer mechanism of the driver/drill of FIG. 4;

FIG. 6 is another partial exploded view illustrating the hammer mechanism of the driver/drill of FIG. 4;

FIG. 7 is a perspective view, in partial cross section, of a clutch mechanism in accordance with another embodiment of the present invention illustrating a blocking assembly in a driver mode;

FIG. 8 is a perspective view, in partial cross section, of the clutch mechanism of FIG. 7 illustrating the blocking assembly in a drill mode;

FIG. 9 is a partial side view, in cross section, of the clutch mechanism of FIG. 7;

FIG. 10 is a partial side view, in cross section, of the clutch mechanism of FIG. 8;

FIG. 11 is a partial side view of a blocking assembly in a driver mode in accordance with another aspect of the clutch mechanism of FIG. 7;

FIG. 12 is a partial side view of the blocking assembly of FIG. 11 in a drill mode;

FIG. 13 is a perspective view, in partial cross section, of a clutch mechanism in accordance with another embodiment of the present invention illustrating a capture assembly in a driver mode;

FIG. 14 is a perspective view, in partial cross section, of the clutch mechanism of FIG. 13 illustrating the capture assembly in a drill mode;

FIG. 15 is a partial side view, in cross section, of the capture assembly of FIG. 14;

FIG. 16 is a partial side view of a capture assembly in accordance with another aspect of the clutch mechanism of FIG. 13;

FIG. 17 is a side view of a link member of the clutch mechanism of FIG. 13;

FIG. 18 is a side view of another link member of the clutch mechanism of FIG. 13;

FIG. 17 is a side view of another link member of the clutch mechanism of FIG. 13;

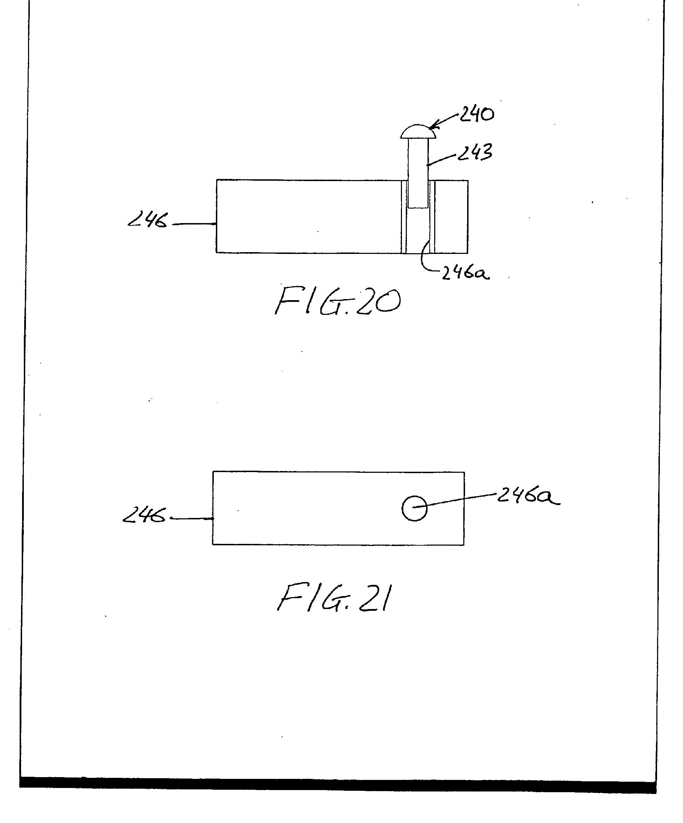

FIG. 20 is a partial side view of a capture assembly in accordance with another aspect of the clutch mechanism of FIG. 13; and

FIG. 21 is a top view of a link member of the clutch mechanism of FIG. 20.

### DETAILED DESCRIPTION

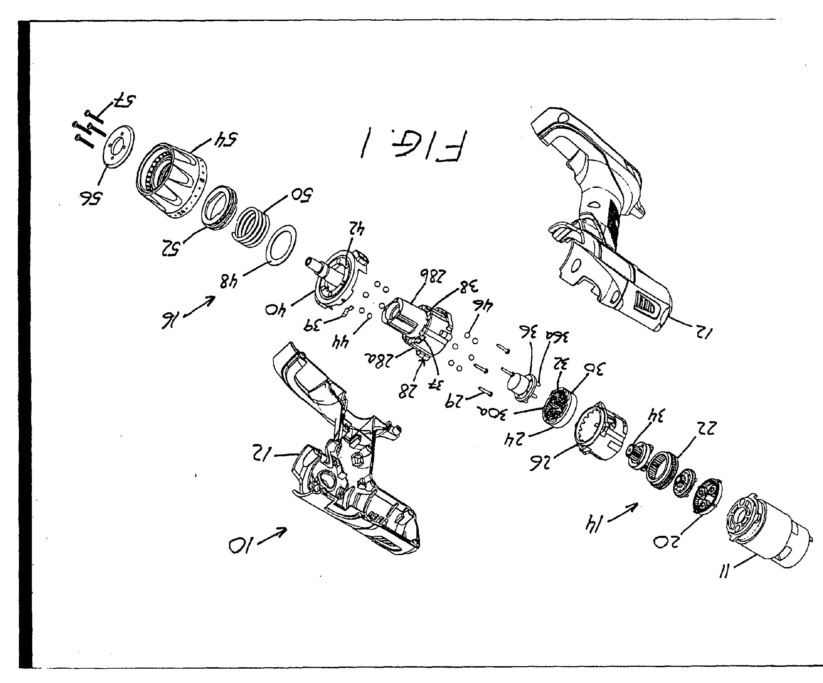

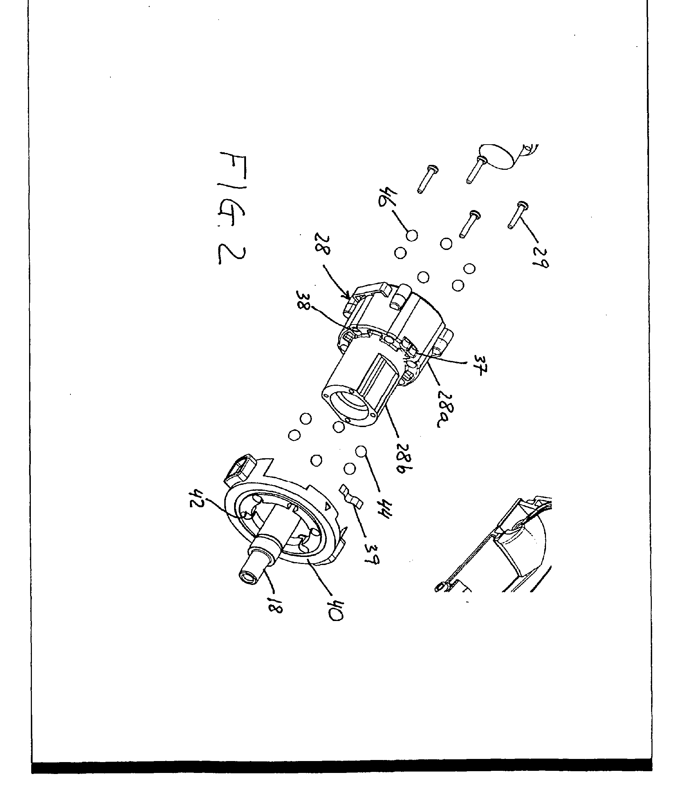

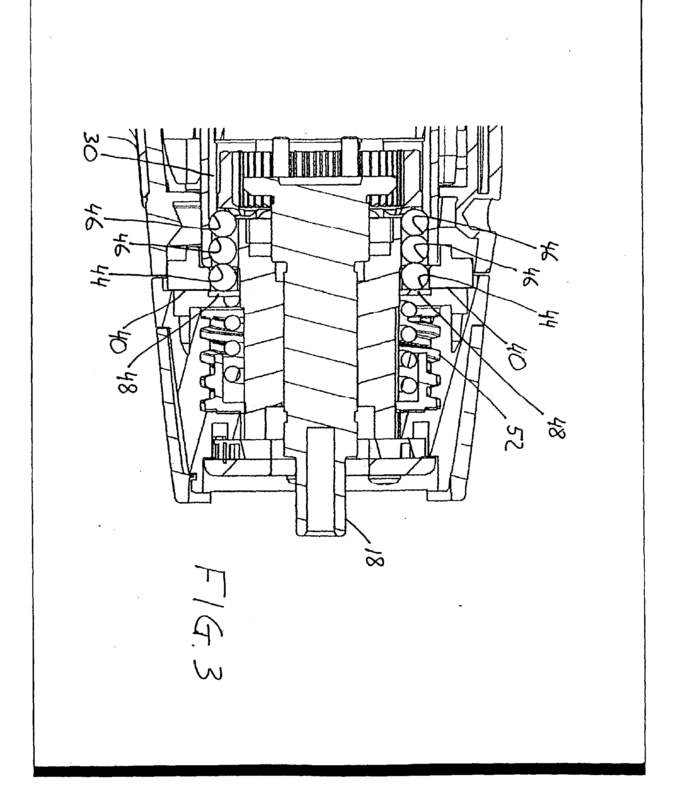

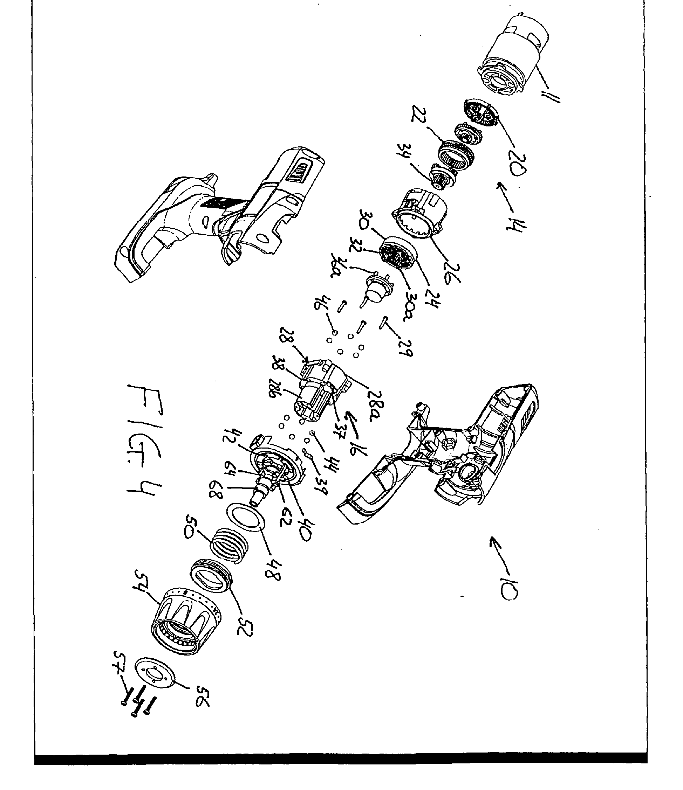

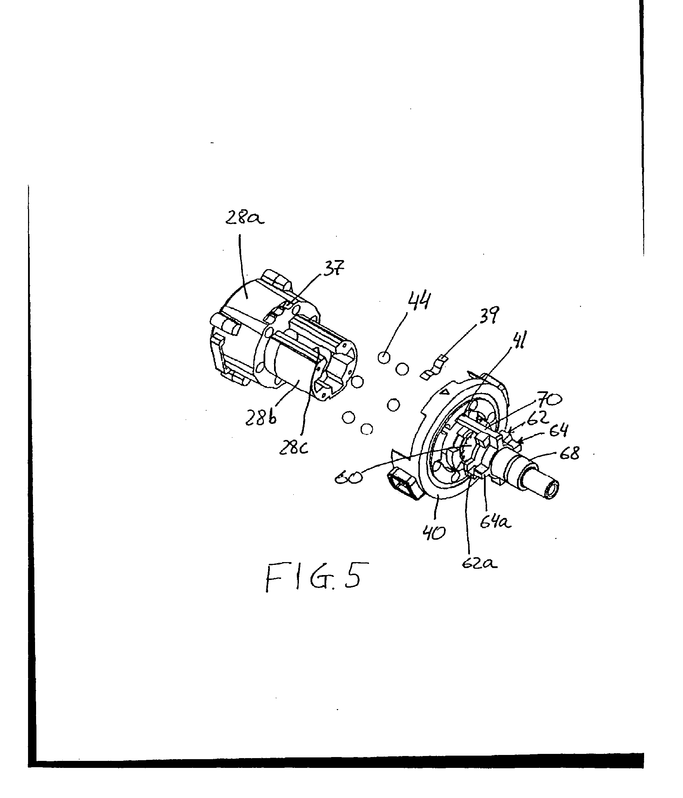

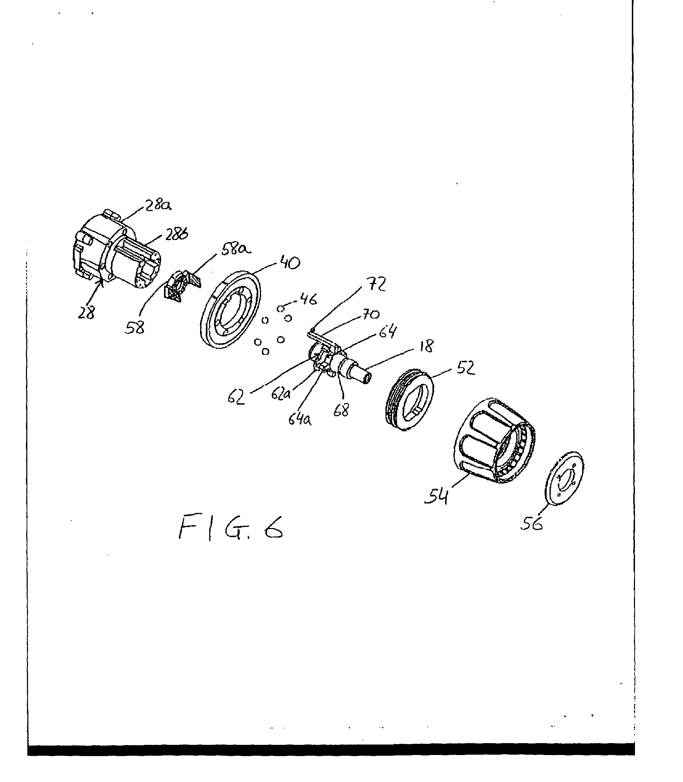

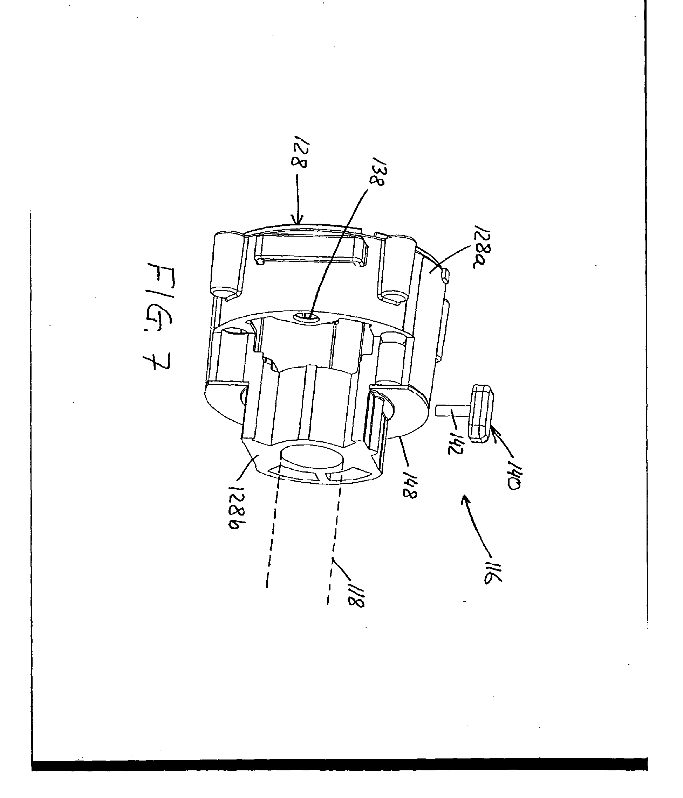

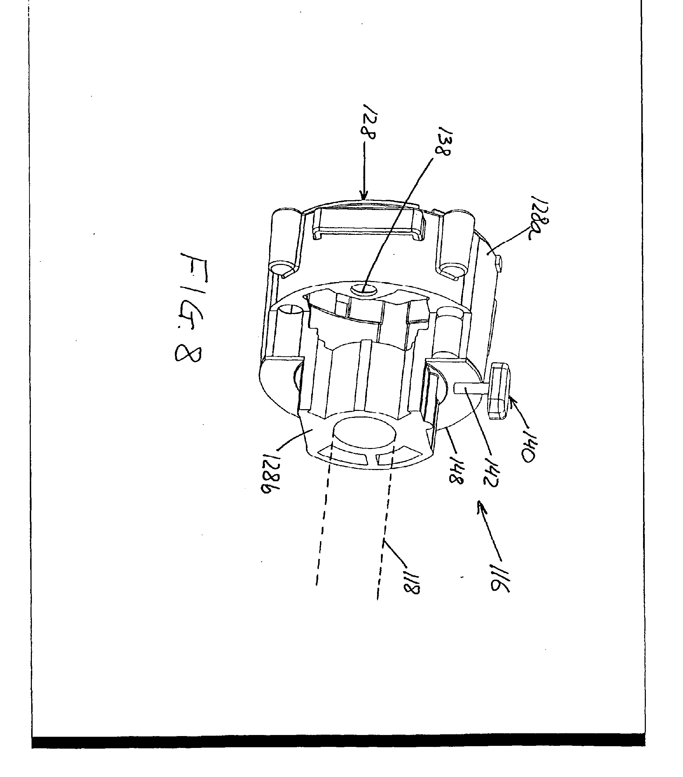

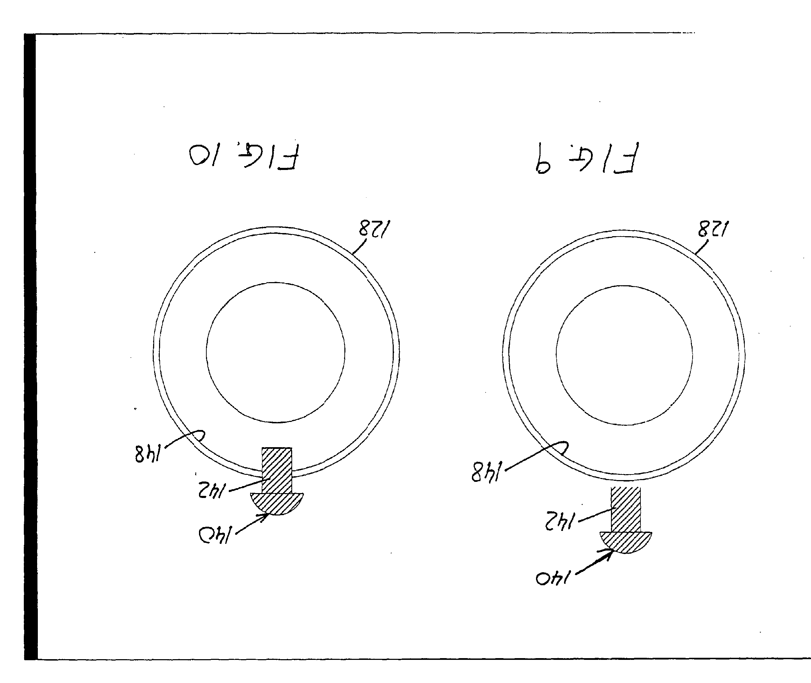

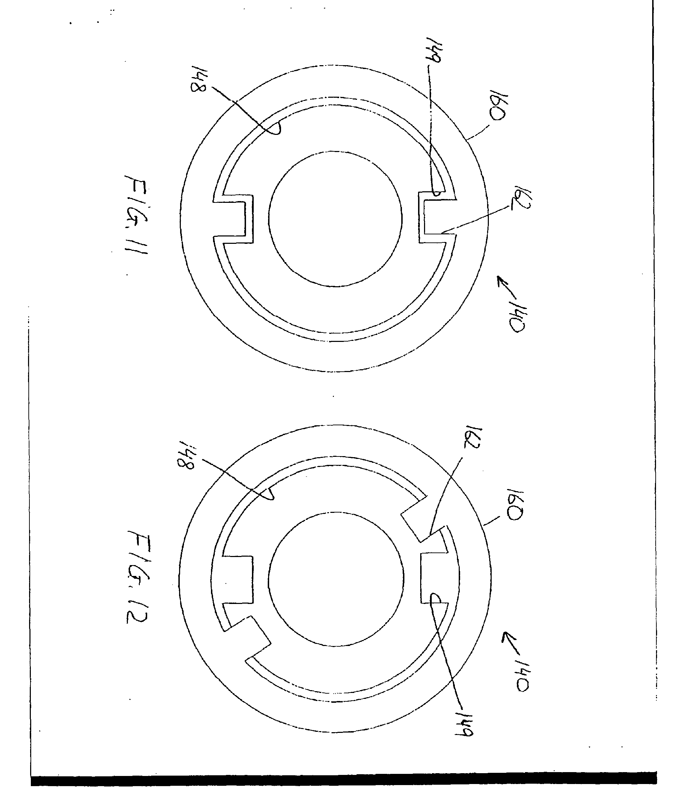

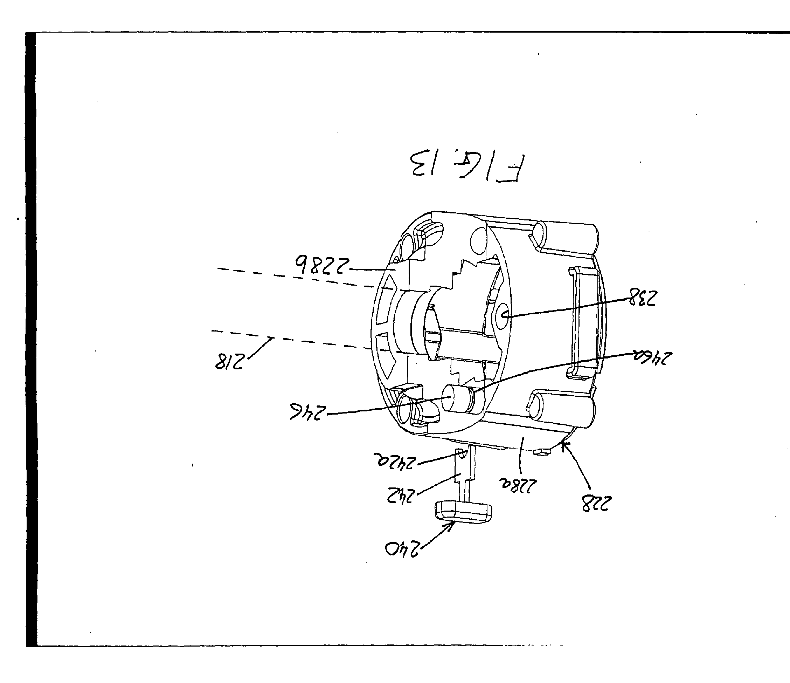

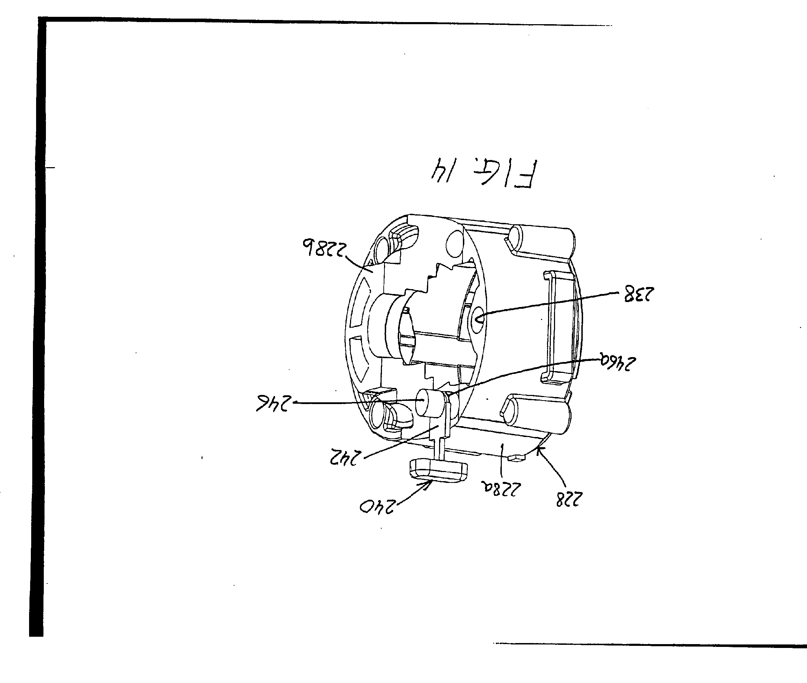

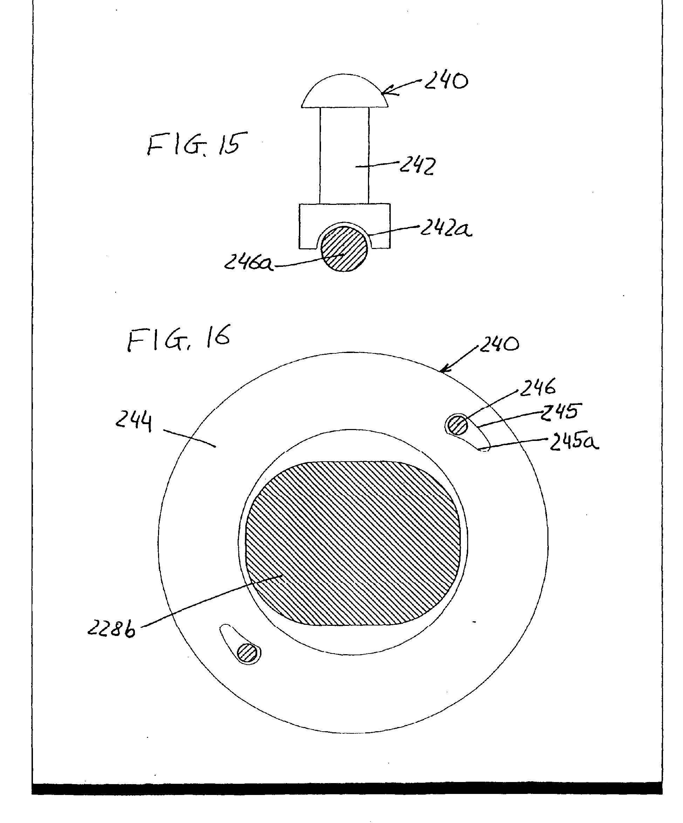

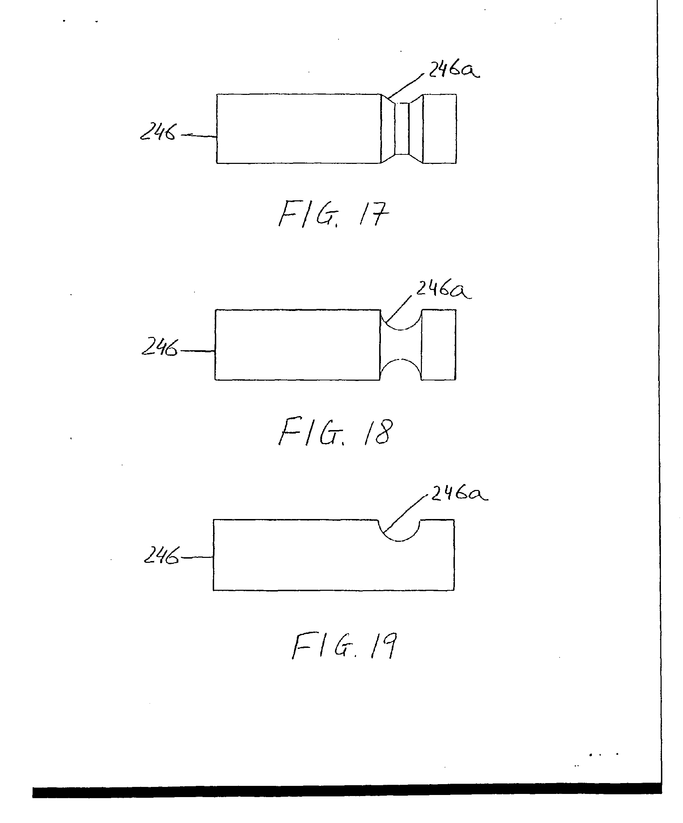

Referring now to FIGS. 1-3, there is shown a combination driver/drill tool 10 according to an embodiment of the present invention. The tool 10 includes a housing 12 that encloses a motor 11 for generating rotation or torque. A speed reduction gearbox 14 is mounted in the housing 12 for rotatably connecting the shaft of the motor 11 to an output spindle 18 via a clutch mechanism 16. The clutch mechanism 16 is capable of switching the tool 10 between a drill mode and a drive mode of operation, as described in further detail below. The output spindle 18 attaches to a conventional chuck (not shown) adapted to securely grasp a tool bit for engaging a workpiece.

The gearbox 14 includes at least one, and is shown including a pair of planetary gear sets 20 and 22 having a conventional structure for transmitting rotation or torque of the motor 11 and reducing the speed of the motor 11. The shaft of the motor 11 rotatably engages the first planetary gear set 20, which drives the second planetary gear set 22. As can he appreciated by one of ordinary skill in the art, the first and second planetary gear sets 20 and 22 are arranged inside a rear gearbox housing 26 to provide a two-speed gear reduction between the output shaft of the motor 11 and the pinion gear 34 of the second planetary gear set 22. A speed selector switch (not shown) may be provided on the rear gearbox housing 26 for selecting a high speed range for fast drilling or driving applications or a low speed range for high power and torque applications. When using the tool 10 in the high speed range, the speed will increase and the drill will have less torque. When using the tool 10 in the low speed range, the speed will decrease and the drill will have more torque.

The gearbox 14 may further include a third planetary gear set 24 that is arranged inside a forward gearbox housing 28 for cooperating with the clutch mechanism 16 to rotate the spindle 18. The third planetary gear set 24 includes a ring gear 30 and a set of planetary gears 32. The ring gear 30 is rotatably disposed inside a body portion 28a of the forward gearbox housing 28. The body portion 28a of the forward gearbox housing 28 is secured to the rear gearbox housing 26, for example, using fasteners 29 that are received in threaded holes formed on the outer surface of the body portion 28a and corresponding through holes formed on a flange of the rear gearbox housing 26. The planetary gears 32 mesh with the ring gear 30 and the pinion gear 34 of the second planetary gear set 22. The planetary gears 32 are rotatably supported on axial projections 36a of a planet carrier 36 that is coupled to the rear end of the spindle 18 for rotation therewith. The spindle 18 is rotatably received inside a shoulder portion 28b of the forward gearbox housing 28.

In this way, the pinion gear 34 of the second planetary gear set 22 operates as a sun gear to drive the planetary gears 32 of the third planetary gear set 24. If the ring gear 30 is rotatably fixed inside the body portion 28a of the forward gearbox housing 28, the planetary gears 32 will orbit the pinion gear 34 to drive the carrier 36 and the spindle 18 to rotate about the axis of the pinion gear 34. This arrangement positively transmits torque from the pinion gear 34 to the spindle 18. In contrast, if the ring gear 30 is allowed to rotate or idle inside the forward gearbox housing 28, the pinion gear 34 may not transmit torque to the spindle 18 and may instead drive the planetary gears 32 to spin about their own axis on the axial projections 36a of the carrier 36.

A plurality of protrusions 30a are formed circumferentially on the outer shoulder of ring gear 30 for cooperating with the clutch mechanism 16 to selectively prevent the ring gear 30 from rotating relative to the forward gearbox housing 28, as described in further detail below. The protrusions 30a are arranged symmetrically with a set of openings 38 that are formed circumferentially in the body portion 28a of the front gearbox housing 28 and that extend through the body portion 28a.

The clutch mechanism 16 includes a set of link members 46, a mode selector 40, and a set of bypass members 44. Each opening 38 in the body portion 28a movably receives at least one link member 46, for example, a cylindrical or spherical member, therein. The mode selector 40, for example, in the form of a ring, is rotatably mounted on the shoulder portion 28b of the front gearbox housing 28 and is axially fixed on the shoulder portion 28b immediately adjacent the body portion 28a. The mode selector 40 is provided with a notch spring 39 that cooperates with one or more notches 37 formed on the body portion 28a to secure the mode selector 40 when it is rotated between diffcrcnt positions, as described in further detail below.

A single opening or, as shown, a plurality of openings 42 are formed circumferentially on the mode selector 40 symmetrically with the pass through openings 38 in the body portion 28a. Each opening 42 in the mode selector 40 movably receives a bypass member 44 therein, for example, in the form of a spherical member, a pin having a hexagonal, square, or circular cross section, or other shapes. In this way, the link members 46 abut against the shoulder of ring gear 30 at one end of the body portion 28a and the bypass members 44 at the opposite end of the body portion.

A retaining washer 48 and a spring 50 are loosely supported on the shoulder portion 28b of the front gearbox housing 28 in front of the mode selector 40. The spring 50 presses against the retaining washer 48 to urge the bypass members 44 into engagement with the link members 46 so as to bias the link members 46 against the shoulder of the ring gear 30.

The spring 50 is disposed between the retaining washer 48 and an annular spring seat 52 that is non-rotatably fitted over the shoulder portion 28b of the front gearbox housing 28. The inner surface of the spring seat 52 and the outer surface of the shoulder portion 28b have cooperating surfaces formed thereon such that the spring seat 52 is moveable only in an axial direction relative to the shoulder portion 28b. For example, radial projections formed on the inner surface of the spring seat 52 are received in corresponding axial slots or grooves formed on the shoulder portion 28b.

The spring seat 52 has a threaded outer portion to engage a threaded inner portion of a torque adjustment ring 54 to vary the force acting on the retaining washer 48. The torque adjustment ring 54 is axially fixed to the front gearbox housing 28 using an end washer 56 which is disposed over the front end of the torque adjustment ring 54. The end washer 56 defines a set of through holes arranged so as to correspond to mounting holes formed in the front face of shoulder portion 28b of the front gearbox housing 28. A set of fasteners 57 inserted in the through holes of the end washer 56 are received in the mounting holes of the shoulder portion 28b so as to secure the torque adjustment ring 54 to the front gearbox housing 28 in an axial direction.

This arrangement allows the torque adjustment ring 54 to rotate relative to the housing 28. Rotation of the torque adjustment ring 54 causes the threaded inner portion thereof to engage and move the spring seat 52 in an axial direction. The direction of rotation of the torque adjustment ring 54 determines whether the spring seat 52 is fed against or away from the spring 50 for increasing or decreasing the force acting on the retaining washer 48.

In a drill mode of the tool 10, the mode selector 40 is rotated to a first position such that the openings 42 in the mode selector 40, and the bypass members 44 received therein, are oriented away from the openings 38 in the body portion 28a. In this way, the link members 46 inside the openings 38 are axially blocked between the shoulder of ring gear 30 and the mode selector 40. This arrangement causes the protrusions 30a on the shoulder of the ring gear 30 to firmly engage the link members 46 so as to prevent the ring gear 30 from rotating inside the forward gearbox housing 28. Accordingly, the motor 11 will drive the spindle 18 for sustained rotation without any torque limitation of the ring gear 30.

In a drive mode of the tool 10, the mode selector 40 is rotated to a second position different from the first position such that the openings 42 formed therein are aligned with the openings 38 in the body portion 28a. As a result, the link members 46 and the bypass members 44 can be displaced forward in an axial direction against the force of the retaining washer 48 and the spring 50. If the load on the spindle is sufficient to overcome the torque on the ring 30, the ring gear 30 will lift the link members 46 over the protrusions 30 so as to rotate inside the forward gearbox housing 28. In particular, the protrusions 30a have a ramped surface for biasing the link members 46 axially when the ring gear 30 rotates. When the ring gear 30 is made rotatable in this way, the motor 11 will not transmit torque to the spindle 18. In the drive mode, the torque limitation of the ring gear 30 is adjusted by rotating the torque adjustment ring 54 to vary the spring force acting on the retaining washer 48, as described above.

Therefore, this arrangement for the clutch mechanism 16 using the mode selector 40 to block the link members 46, as described above, allows a user to switch between the drill and drive modes of operation without affecting the torque limitation setting of the drive mode.

In another aspect, shown in FIGS. 4-6, the driver/drill tool 10 further includes a hammer mechanism for providing a hammer mode of operation. The clutch mechanism 16 is capable of switching the tool 10 between the drive, drill, and hammer modes of operation, as described in further detail below.

The hammer mechanism includes a first ratchet member 58 that is non-rotatably mounted inside the shoulder portion 28b of the front gearbox housing 28. The first ratchet member 58 has a plurality of vertical alignment arms 58a formed around its outer periphery that are received in slots 28c axially formed in the inner surface of the shoulder portion 28b. The end of the shoulder portion 28b abutting the body portion 28a has an annular stop face formed therein with a diameter substantially smaller than the first ratchet member 58 for limiting the rearward axial movement of the first ratchet member. The spindle 18 is journaled on a bearing (not shown) that is press fit inside the stop face of the shoulder portion 28b.

A second ratchet member 60 is non-movably and non-rotatably mounted on the spindle 18 opposite with the first ratchet member 58. A plurality of teeth are formed on the opposing faces of the ratchet members 58, 60 to generate reciprocating motion in an axial direction when the ratchet members 58, 60 are brought into rotary engagement. The first and second ratchet members 58, 60 can be selectively engaged to impart reciprocating motion to the spindle 18, as described in further detail below.

A pair of ring members 62 and 64 are movably and rotatably mounted on the spindle 18 immediately in front of the second ratchet member 60. A coil spring (not shown) is supported on the spindle 18 between the ring members 62 and 64. The ends of the coil spring are attached to the ring members 62 and 64. A collar 68 is fixed on the spindle 18 in front of the second ring member 64. The coil spring urges the ring members 62 and 64 away from each other in an axial direction, thereby biasing the first ring member 62 against the second ratchet member 60 and the second ring member 64 against the collar 68.

The first ring member 62 has a set of coupling arms 62a formed around its outer periphery that are received in slots 28c of the inner portion of the shoulder portion 28b so as to rotatably secure the first ring member 62 inside the shoulder portion 28b when the spindle 18 is journaled inside the shoulder portion 28b. This arrangement allows the spindle 18 and the second ratchet member 60 to rotate relative to the first ratchet member 58. The coupling arms 62a of the first ring member 62 also abut the vertical alignment arms 58a of the first ratchet member 58 when the spindle 18 is journaled inside the shoulder portion 28b, such that the first ratchet member 58 and the second ratchet member 60 are normally disengaged.

To bring the second ratchet member 60 into engagement with the first ratchet member 58, the second ring member 64 is loosely mounted inside the shoulder portion 28b. In particular, the second ring member 64 includes a set of tabs 64a formed around its outer periphery that are received loosely in slots 28c of the inner portion of the shoulder portion 28b to allow the second ring member 64 to rotate therein. The ends of the coil spring rotationally urge ring members 62 and 64 in opposite directions such that the coupling arms 62a abut against the tabs 64a to prevent the second ring member 64 from being axially displaced towards the first ring member 62. Rotation of the second ring member 64 against the torsional resistance of the spring moves tabs 64a out of engagement with the coupling arms 62. When the tabs 64a and the coupling arms 62 are disengaged, axial loading of the spindle 18 will cause the collar 68 to press against the second ring member 64 to compress the coil spring, thereby moving the spindle 18 and the second ratchet member 60 toward the first ratchet member 58 and bringing opposing faces of the ratchet members 58 and 60 into engagement to generate reciprocating motion of the spindle 18.

The second ring member 64 is provided with an actuation lever 70 that extends radially outward from one of the tabs 64a. A slot 28c of the inner portion of thc shoulder portion 28b forms an open groove extending axially over at least a portion of the length of the shoulder portion 28b to receive the actuation lever 70. The end of the actuation lever 70 opposite the tab 64a includes a grab member 72 formed thereon. The grab member 72 is received in a recess 41 formed on the periphery of the inner circumferential shoulder of the mode selector 40 abutting the front gearbox housing 28.

In a hammer mode of the tool 10, the mode selector 40 is rotated to a third position without any adjustment of the torque adjustment ring 54. In particular, the recess 41 is dimensioned such that the mode selector 40 can be rotated between the first position corresponding to the drill mode and the second position corresponding to the drive mode without engaging the grab member 72. In the third position of the mode selector 40, the inner surfaces of the recess 41 engage the grab member 72 to rotate the second ring member 64 to move tabs 64a out of engagement with the coupling arms 62. In this way, axial loading of the spindle 18 brings the ratchet members 58 and 60 into engagement with each other for generating reciprocating motion of the spindle 18.

Therefore, this arrangement for the clutch mechanism 16 using the mode selector 40 to block the link members 46, as described above, allows a user to switch between the drill, drive and hammer modes of operation without affecting the torque limitation setting of the drive mode.

According to another embodiment of the present invention, a drill tool 110 includes a gearbox (not shown) for rotatably connecting the shaft of a motor (not shown) to an output spindle 118 via a clutch mechanism 116, as shown in FIGS 7-10. The clutch mechanism 116 is capable of switching the tool 110 between a drill mode and a drive mode, as described in further detail below. The output spindle 118 attaches to a conventional chuck (not shown) adapted to securely grasp a tool bit for engaging a workpiece.

As described above, the gearbox includes a pair of planetary gear sets 20 and 22 having a conventional structure for transmitting rotation or torque of the motor and reducing the speed of the motor. The gearbox further includes a third planetary gear set 24 arranged inside a forward gearbox housing 128, as described above, to rotate the spindle 118 under control of the clutch mechanism 116. The ring gear 30 of the third planetary gear set 24 has a plurality of raised protrusions 30a formed circumferentially thereon which cooperate with the clutch mechanism 116 so as to selectively prevent the ring gear 30 from rotating relative to the forward gearbox housing 128.

The clutch mechanism 116 includes a blocking assembly 140 and link members 146. The link members 146 may be, for example, in the form of spherical members or pins having any suitable shape such as square, hexagonal, or circular cross-sections. The link members 146 are moveably received in a set of openings 138 formed circumferentially on a body portion 128a of the front gearbox housing 128 and extending therethrough. A retaining washer 148 is movably mounted adjacent the link members 146 on a shoulder portion 128b of the front gearbox housing 128 such that the link members 146 abut against the ring gear 30 of the third planetary gear set 24 at one end of the body portion 128a and the retaining washer 148 at the opposite end of the body portion 128a.

A spring 50 positioned between the retaining washer 148 and an annular spring seat 52 acts against the washer 148 to urge the washer 148 against the link members 146 and the body portion 128a of the front gearbox housing 128. In this way, the link members 146 are biased against the front face of the ring gear 30 of the third planetary gear set 24. As described above, the annular spring seat 52 engages a torque adjustment ring 54 to vary the biasing force acting on the retaining washer 148 and the link members 146.

The blocking assembly 140 is arranged on the front gearbox housing 128 adjacent the retaining washer 148. The blocking assembly 140 includes a blocking member 142, for example, in the form of a push pin, rod, dowel or rivet, for selectively engaging the retaining washer 148 to prevent axial displacement of the link members 146. A return spring may be mounted on the blocking member 142 to bias the blocking member 142 away from the washer 148.

In a drill mode of the tool 110, the blocking assembly 140 is manually depressed such that the blocking member 142 is abutting the washer 148, as shown in FIGS. 8 and 10. In this way, the washer 148 is axially engaged between the body portion 128a of the front gearbox housing 128 and the blocking member 142. As a result, the link members 146 are blocked between the ring gear 30 of the third planetary gear set 24 and the washer 148 and firmly engage the raised protrusions 30a on the ring gear 30. This arrangement rotatably fixes the ring gear 30 of the third planetary gear set 24 inside the forward gearbox housing 28 as described above. Accordingly, the motor will drive the spindle 18 for sustained rotation without torque limitation of the ring gear 30 of the third planetary gear set 24.

In a drive mode of the tool 110, the blocking member 142 is released such that the blocking member 142 is drawn out of engagement with the retaining washer 148, as shown in FIGS. 7 and 9. This arrangement allows the link members 146 to travel in an axial direction against the force of the spring 50 acting on the washer 148. In this way, the ring gear 30 of the third planetary gear set 24 will be rotatable inside the forward gearbox housing 128 to allow the motor to drive the ring gear 30 instead of the spindle 118 when the load on the spindle 118 is sufficient to overcome the torque on the ring gear 30, as described above. In the drive mode, the torque limitation of the ring gear 30 is adjusted by rotating the torque adjustment ring 54 to vary the spring force acting on the retaining washer 148, as described above with reference to retaining washer 48 shown in FIGS. 1 and 4.

The tool 110 may also include a hammer mechanism for selectively imparting reciprocating motion to the spindle 118. For example, as described above, the hammer mechanism includes a pair of ratchet members 58 and 60 mounted inside the forward gearbox housing 128 to generate reciprocating motion when the ratchet members 58 and 60 are brought into rotary engagement. In order to selectively engage the ratchet members 58 and 60, a pair of ring members 62 and 64 are mounted on the spindle 118 in front of the ratchet members 58 and 60, as described above. The second ring member 64 is provided with an actuation lever 70 which can be rotatably engaged, for example, by a hammer mode selector (not shown), for example, in the form of a ring, located between the washer 148 and the torque adjustment ring 54. In this way, rotation of the hammer mode selector in one direction engages the actuation lever 70 to rotate the second ring member 64 such that axial loading of the spindle 118 will bring the ratchet members 58 and 60 into rotary engagement, as described above. Likewise, rotation of the hammer mode selector in the opposite direction disengages the actuation lever 70 to prevent the ratchet members 58 and 60 from coming into rotary engagement. It will be appreciated by one of ordinary skill in the art that the actuation lever 70 alternatively can be engaged by the torque adjustment ring 54, thereby eliminating the need for an additional hammer mode selector. In this arrangement, rotation of the torque adjustment ring is necessary to bring the ratchet members 58 and 60 into and out of rotary engagement.

In another aspect, the blocking assembly 140 includes a blocking ring 160, as shown in FIGS. 11 and 12. The blocking assembly 140 is rotatably mounted on the washer 148 and is axially fixed to the body portion 128a of the front gearbox housing 128. A projection 162 is formed on the inner shoulder of the ring 160 to extend axially in front of the washer 148. An axial slot 149 is provided at the outer surface of the washer 148 for receiving the projection 162.

When the ring 160 is rotated such that the projection 162 abuts the surface of the washer 148, the washer 148 is axially engaged between the ring 160 and the body portion 128a. As a result, the link members 146 are blocked between the ring gear of the third planetary gear and the washer 148 so as to firmly engage the raised protrusions on the ring gear and rotatably fix the ring gear inside the forward gearbox housing 28. Therefore, this arrangement corresponds to a drill mode of the tool 110 in which the motor will drive the spindle 18 for sustained rotation without torque limitation of the ring gear.

When the ring 160 is rotated such that the projection 162 and the slot 149 are coaxially aligned, the washer 148 is axially moveable on the body portion 128a of the front gearbox housing 128. This arrangement allows the link members 146 to travel in an axial direction such that the ring gear 30 of the third planetary gear set 24 will be rotatable inside the forward gearbox housing 128. Therefore, this arrangement corresponds to the drive mode of the tool 110.

According to another embodiment of the present invention, a drill tool 210 includes a gearbox (not shown) for rotatably connecting the shaft of a motor (not shown) to an output spindle 218 via a clutch mechanism 216, as shown in FIGS. 13-21. The clutch mechanism 216 is capable of switching the tool 210 between a drill mode and a drive mode, as described in further detail below. The output spindle 218 attaches to a conventional chuck (not shown) adapted to securely grasp a tool bit for engaging a workpiece.

As described above, the gearbox includes a pair of planetary gear sets having a conventional structure for transmitting rotation or torque of the motor and reducing the speed of the motor. The gearbox further includes a third planetary gear set (not shown) arranged inside a forward gearbox housing 228, as described above, to rotate the spindle 218 under control of the clutch mechanism 216. The ring gear of the third planetary gear set has a plurality of raised protrusions formed circumferentially thereon which cooperate with the clutch mechanism 216 so as to selectively prevent the ring gear from rotating relative to the forward gearbox housing 228.

The clutch mechanism 216 includes a capture assembly 240 and a set of slotted link members 246. Each link member 246 includes a slot 246a in one end thereof, as shown in FIGS. 17-19. For example, the link member 246 could be in the form of a pin that has a groove at one end thereof. The link members 246 are moveably received in a set of openings 238 formed in a body portion 228a of the front gearbox housing 228 and extending therethrough. A retaining washer 248 is movably mounted in front of the link members 246 on a shoulder portion 228b of the front gearbox housing 228 such that the link members 246 abut against the ring gear 30 of the third planetary gear set 24 at one end of the body portion 228a and the retaining washer 248 at the opposite end of the body portion 228a.

A spring 50 positioned between the retaining washer 248 and an annular spring seat 52 acts against the washer 248 to urge the washer 248 against the link members 246. In this way, the link members 246 are biased against the front face of the ring gear 30 of the third planetary gear set 24. As described above with reference to retaining washer 48 shown in FIGS. 1 and 4, the annular spring seat 52 engages a torque adjustment ring 54 to vary the biasing force acting on the retaining washer 248 and the link members 246.

The capture assembly 240 is arranged on the front gearbox housing 228 adjacent the retaining washer 248. In particular, the capture assembly 240 includes at least one capture member 242 that is selectively received in at least one of the slots 246a of a link members 246 for securing the link members 246 in an axial direction relative to the front gearbox housing 228.

In one aspect, the capture assembly 240 comprises a push-button 242 including at least one bracket 242a formed at one end thereof, as shown in FIGS. 13-15. The bracket 242a is dimensioned to be closely received in the groove or slot 246a of a link member 246 without play to axially capture the link member 246. A return spring may be mounted on the capture assembly 240 to bias the push-button 242 away from the link members 246.

In a drill mode of the tool 210, the push-button 242 is manually depressed to engage the bracket 242a in the groove or slot 246a of the link member 246. This arrangement captures the link member 246 axially to rotatably fix the ring gear 30 of the third planetary gear set 24 inside the forward gearbox housing 228. Accordingly, the motor will drive the spindle 218 for sustained rotation without torque limitation of the ring gear 30.

In a drive mode of the tool 210, the push-button 242 is released such that the bracket 242a is withdrawn out of the groove or slot 246a of the link member 246. This arrangement allows the link members 246 to travel in an axial direction. In this way, the ring gear 30 of the third planetary gear set 24 will be rotatable inside the forward gearbox housing 228.

In another aspect, the capture assembly 240 comprises a ring 244 including arced openings 245 formed circumferentially therein for receiving the link members 246, as shown in FIG. 16. The ring 244 is rotatably mounted on the shoulder portion 228b behind the retaining washer 248 such that the openings 245 are positioned around the grooves or slots 246a of the link members 246. Each arced opening 245 includes a tapered portion 245a that is dimensioned so as to be closely received in a circumferential groove or slot 246a without play so as to secure the link member 146.

In a drill mode of the tool 210, the ring 244 is rotated in a first direction so as to capture the link members 246 within the tapered portions 245a of the openings 245, thereby rotatably fixing the ring gear 30 of the third planetary gear set 24 inside the forward gearbox housing 28.

In a drive mode of the tool 210, the ring 244 is rotated in an opposite direction to disengage the link members 246 from the tapered portions 245a of the openings 245 such that the link members 246 are moveable in an axial direction through the openings 245. In this way, the ring gear 30 of the third planetary gear set 24 will be rotatable inside the forward gearbox housing 128.

In another aspect, the slots 246a comprise through-holes formed transverse to the longitudinal axis of the link member 246 at one end thereof, as shown in FIGS. 20-21. The capture assembly 240 includes a pin 243 that is received in the through-hole or slot 246a of a link member 246 to axially capture the link member 246. A return spring may be mounted on the capture assembly 240 for biasing the pin 243 away from the link members 246.

In a drill mode of the tool 210, the capture assembly 240 is depressed to engage the pin 243 in the through-hole or slot 246a of the link member 246. This arrangement captures the link member 146 axially to rotatably fix the ring gear 30 of the third planetary gear set 24 inside the forward gearbox housing 228. Accordingly, the motor will drive the spindle 218 for sustained rotation without torque limitation of the ring gear 30.

In a drive mode of the tool 210, the capture assembly 240 is released such that the pin 243 is withdrawn out of the through-hole or slot 246a of the link member 246. This arrangement allows the link members 246 to travel in an axial direction. In this way, the ring gear 30 of the third planetary gear set 24 will be rotatable inside the forward gearbox housing 228.

The tool 210 may also include a hammer mechanism for selectively imparting reciprocating motion to the spindle 218. For example, as described above, the hammer mechanism includes a pair of ratchet members 58 and 60 mounted inside the forward gearbox housing 228 to generate reciprocating motion when the ratchet members 58 and 60 are brought into rotary engagement. In order to selectively engage the ratchet members 58 and 60, a pair of ring members 62 and 64 are mounted on the spindle 218 in front of the ratchet members 58 and 60, as described above. The second ring member 64 is provided with an actuation lever 70 which can be rotatably engaged, for example, by a hammer mode selector (not shown), for example, in the form of a ring, located between the washer 248 and the torque adjustment ring 54. In this way, rotation of the hammer mode selector in one direction engages the actuation lever 70 to rotate the second ring member 64 such that axial loading of the spindle 218 will bring the ratchet members 58 and 60 into rotary engagement, as described above. Likewise, rotation of the hammer mode selector in the opposite direction disengages the actuation lever 70 to prevent the ratchet members 58 and 60 from coming into rotary engagement. It will be appreciated by one of ordinary skill in the art that the actuation lever 70 alternatively can be engaged by the torque adjustment ring 54, thereby eliminating the need for an additional hammer mode selector. In this arrangement, rotation of the torque adjustment ring is necessary to bring the ratchet members 58 and 60 into and out of rotary engagement.

Further, it will be appreciated that the arrangement of the gearbox 14 described above is meant to be illustrative, rather than limiting. Those skilled in the art will recognize that other gearbox systems could also transmit rotation or torque of the motor 11 and reduce the speed of the motor 11 according to the present invention. For example, the gearbox 14 may include first, second and third planetary gear sets which are arranged such that torque is transmitted to the spindle 18 only if a ring gear of the first planetary gear set is rotatably fixed relative to the forward gearbox housing 28. If the ring gear of the first planetary gear set is allowed to rotate or idle inside the forward gearbox housing 28, torque may not be transmitted to the spindle 18, 118, or 218. In this arrangement, the link members 46, 146, or 246 may pass through guide openings or grooves that are formed on the front gearbox housing 28 such that the link members 46, 146, or 246 are abutting the ring gear of the first planetary gear set and the torque adjustment ring 54. The ring gear of the first planetary gear set may have the protrusions formed circumferentially thereon for cooperating with the clutch mechanism 16, 116, or 216 to selectively prevent the ring gear from rotating relative to the forward gearbox housing 28, as described above.

It is therefore intended that the foregoing detailed description be regarded as illustrative rather than limiting, and that it be understood that it is the following claims, including all equivalents, that are intended to define the spirit and scope of this invention.

## Claims

1. A combination drill comprising:
a gearbox connected to a motor and an output spindle and including a ring gear;
a clutch mechanism coupled with said gearbox to selectively transmit a torque from said motor to said output spindle, said clutch mechanism including:
at least one link member disposed adjacent said ring gear and
a mode selector disposed adjacent said at least one link member, said mode selector having at least one opening formed thereon for receiving a bypass member therein, said mode selector further having a first position in which said bypass member does not abut said at least one link member, and a second position in which said bypass member abuts said at least one link member.

2. The combination drill of claim 1 further comprising a torque adjustment mechanism including a washer disposed adjacent said mode selector, a spring seat mounted coaxially with said washer, a torque adjustment ring rotatably mounted on said spring seat for causing the spring seat to move in an axial direction, and a spring disposed between said washer and said spring seat for exerting a biasing force against said at least one link member in said second position, whereby rotation of said torque adjustment ring moves said spring seat in an axial direction to vary said biasing force.

3. The combination drill of claim 1 further comprising a hammer mechanism including a first ratchet non-rotatably mounted in a gearbox housing and spaced apart in said first and second positions from a second ratchet fixedly mounted on said output spindle, wherein said mode selector further has a third position in which said bypass member is rotated away from said at least one link member and said second ratchet member is positioned to engage said first ratchet member to generate a reciprocating motion of said output spindle.

4. The combination drill of claim 1, wherein said gearbox includes a first planetary gear set and a second planetary gear set for transmitting rotation of said motor and reducing the speed of said motor.

5. The combination drill of claim 4, wherein said gearbox further includes a third planetary gear set having said ring gear rotatably disposed therein.

6. The combination drill of claim 1, wherein said gearbox further has at least one opening formed circumferentially thereon for receiving said at least one link member, and said ring gear includes at least one protrusion formed circumferentially thereon for engaging said at least one link mcmbcr to selectively rotatably fix said ring gear.

7. A combination drill comprising:
a gearbox connected to a motor and an output spindle and including a ring gear;
a washer mounted adjacent said output spindle; and
a clutch mechanism coupled with said gearbox to selectively transmit a torque from said motor to said output spindle, said clutch mechanism including:
at least one link member disposed between said washer and said ring gear and
a blocking member disposed adjacent said washer for selectively engaging said washer, said blocking member having a first position in which said blocking member engages said washer, and a second position in which said blocking member does not engage said washer.

8. The combination drill of claim 7 further comprising a torque adjustment mechanism including a spring seat mounted coaxially with said washer, a torque adjustment ring rotatably mounted on said spring seat for causing the spring seat to move in an axial direction, and a spring disposed between said washer and said spring seat for exerting a biasing force against said at least one link members in said second position, whereby rotation of said torque adjustment ring moves said spring seat in an axial direction to vary said biasing force.

9. The combination drill of claim 7 further comprising a hammer mechanism including a first ratchet non-rotatably mounted in a gearbox housing and spaced apart in said first and second positions from a second ratchet fixedly mounted on said output spindle, and a hammer mode selector mounted on said gearbox housing and having a third position in which said second ratchet member is made engageable with said first ratchet member to generate a reciprocating motion of said output spindle in said first position of said blocking member.

10. The combination drill of claim 7, wherein said blocking member includes a push pin, whereby said push pin abuts said washer when said push pin is manually depressed in front of said washer for axially engaging said washer.

11. The combination drill of claim 10, wherein said clutch mechanism further comprises a return spring mounted on said push pin for urging said push pin away from said washer.

12. The combination drill of claim 7, wherein said blocking member includes a blocking ring rotatably mounted on said washer, said blocking ring including a projection formed thereon extending in front of said washer for axially engaging said washer.

13. A combination drill comprising:
a gearbox connected to a motor and an output spindle and including a ring gear; and
a clutch mechanism coupled with said gearbox to selectively transmit a torque from said motor to said output spindle, said clutch mechanism including:
at least one link member disposed adjacent said ring gear, said at least one link member having a slot, and
a capture member disposed adjacent said at least one link member for selectively engaging said at least one link member, said capture member having a first position in which said capture member is at least partially received in said slot, and a second position in which said capture member does not engage said at least one link member.

14. The combination drill of claim 13 further comprising a torque adjustment mechanism including a washer mounted over said output spindle adjacent said at least one link member, a spring seat mounted coaxially with said washer, a torque adjustment ring rotatably mounted on said spring seat for causing the spring seat to move in an axial direction, and a spring disposed between said washer and said spring seat for exerting a biasing force against said at least one link members in said second position, whereby rotation of said torque adjustment ring moves said spring seat in an axial direction to vary said biasing force.

15. The combination drill of claim 13 further comprising a hammer mechanism including a first ratchet non-rotatably mounted in a gearbox housing and spaced apart in said first and second positions from a second ratchet fixedly mounted on said output spindle, and a hammer mode selector mounted on said gearbox housing and having a third position in which said second ratchet member is made engageable with said first ratchet member to generate a reciprocating motion of said output spindle in said first position of said blocking member.

16. The combination drill of claim 13, wherein said at least one link member includes a pin having an end portion that defines a circumferential groove.

17. The combination drill of claim 16, wherein said capture member includes a push-button having at least one bracket for engaging said at least one link member in said slot.

18. The combination drill of claim 16, wherein said capture member includes a ring that defines an arced opening for receiving said at least one link member, said arced opening having a tapered portion for engaging said at least one link member in said slot.

19. The combination drill of claim 13, wherein said slot includes an end portion that defines a through hole and said capture member includes a pin that is received in said through-hole for engaging said at least one link member.
